## Europäisches Patentamt

## European Patent Office

## Office européen des brevets

(11) Veröffentlichungsnummer: **0 013 947**
**A1**

(12) **EUROPÄISCHE PATENTANMELDUNG**

(21) Anmeldenummer: **80100233.8**

(22) Anmeldetag: **18.01.80**

(51) Int. Cl.³: **F 01 C 1/077**, F 02 B 55/08

(30) Priorität: **26.01.79 DE 2902915**

(43) Veröffentlichungstag der Anmeldung: **06.08.80**
Patentblatt 80/16

(84) Benannte Vertragsstaaten: **FR GB IT SE**

(71) Anmelder: **Sabet, Huschang, Dipl.-Ing.,
Eduard-Pfeiffer-Strasse 67, D-7000 Stuttgart 1 (DE)**

(72) Erfinder: **Sabet, Huschang, Dipl.-Ing., Eduard-Pfeiffer
Strasse 67, D-7000 Stuttgart 1 (DE)**
Erfinder: **Eckhardt, Dietrich, Dr., Steinäcker 60,
D-7307 Aichwald-Lobenrot (DE)**

(74) Vertreter: **Maier, Eugen, Dr.-Ing. et al, Patentanwälte
Dr.-Ing. Eugen Maier Dr.-Ing. Eckhard Wolf
Pischekstrasse 19, D-7000 Stuttgart 1 (DE)**

(54) **Mittelachsige Umlaufkolben-Brennkraftmaschine.**

㊵ Die mittelachsige Umlaufkolben-Brennkraftmaschine besteht aus zwei Gruppen von in dem kreiszylindrischen Mantel (1) eines Motorgehäuses (1, 2, 3) umlaufenden, durch ein Planetenradgetriebe (6, 7) miteinander verbundenen Kolben (4, 5), von denen die Kolben (4) der einen Gruppe mit die Brennräume stirnseitig begrenzenden Seitenteilen (41) verbunden sind und gleichförmig umlaufen, und die Kolben (5) der anderen Gruppe ungleichförmig umlaufen, wobei das Getriebe ein gehäusefestes Innenzahnrad (6), mit diesem kämmende Planetenräder (7), mit den Planetenrädern drehfest verbundene, in mit den großen Kolben (4) starr verbundenen Teile gelagerte Kurbelwellen (8) und an der Nabe (51) der kleinen Kolben (5) gelagerte Pleuelstangen (9) aufweist.

Aufgabe der Erfindung ist es, auf die stirnseitige Anordnung eines besonderen Getriebekäfigs zu verzichten, um einen gedrängteren Aufbau zu erreichen $F_1$ und den Zusammenbau der einzelnen umlaufenden Teile einschließlich des Getriebes außerhalb des Motorgehäuses zu ermöglichen. Hierzu wird das Planetengetriebe (6, 7) auf der einen Seite, das Kurbelgetriebe auf der anderen Seite der Kolben (4, 5) angeordnet und werden die Kurbelwellen (8) in den großen Kolben (4) oder deren Seitenteilen (41) gelagert.

A 12 256
15.1.1979
i - kt

## Mittelachsige Umlaufkolben-Brennkraftmaschine

Die Erfindung betrifft eine mittelachsige Umlaufkolben-Brennkraftmaschine mit den im Gattungsbegriff des Patentanspruchs 1 aufgeführten Merkmalen.

Brennkraftmaschinen dieser Bauart, wie sie z.B. die DE-PS 2 021 640 zeigt, weisen einen an das eine Seitenteil der großen Kolben angeflanschten, ein Kurbelgetriebe aufnehmenden, mit der Abtriebwelle verbundenen Getriebekäfig und ebenfalls auf der Abtriebseite ein auf die Kurbelwellen einwirkendes Planetengetriebe auf. Diese Brennkraftmaschinen weisen den Nachteil einer verhältnismäßig komplizierten und aufwendigen Konstruktion und damit auch verhältnismäßig

A 12 256
15.1.1979
i - kt

hoher Herstellungskosten, sowie den Nachteil eines verhältnismäßig großen spezifischen Bauvolumens und Gewichtes
auf.

Der Erfindung liegt die Aufgabe zugrunde, diese Nachteile
durch eine Vereinfachung der Konstruktion zu beseitigen,
die gemäß der Erfindung darin besteht, daß die Brennkraftmaschine der eingangs genannten Art diejenigen Merkmale
aufweist, die im kennzeichnenden Teil des Patentanspruches 1
angegeben sind.

Durch den Wegfall eines besonderen Getriebekäfigs läßt
sich der Motor nicht nur kürzer bauen, die erfindungsgemäße
Konstruktion hat auch noch den weiteren Vorteil der Verwendung von als Stirnkurbeln ausgebildeten Kurbeln, so daß
Pleuel mit geschlossenem Kopf Verwendung finden können.
Auch bei den anderen Lagerstellen der Kurbelwellen können
geschlossene Lagerschalen verwendet werden, da die Planetenräder lösbar und die Lagerdurchmesser der Kurbelwellen abgestuft sind. Die lösbare und winkelunabhängige Verbindung
der Teile erleichtert zusätzlich die Fertigung der Kurbelwellen und der Planetenräder. Ein weiterer Vorteil gegenüber
der vorbekannten Konstruktion besteht darin, daß die Verzahnung in ihrer Lage gegenüber dem Kurbelzapfen nicht berücksichtigt zu werden braucht.

Etwaige Überlastungen der Gleitlager und Zahnräder bei Durchbiegungen der Kurbelwellen und der Bolzen unter Last werden vorteilhafterweise durch ballige Planetenräder, konische Kurbelwellenlagerzapfen und biegeelastisch ausgebildete Pleuelstangen vermieden. Auch die Kühlung der großen Kolben wird durch die im Kühlöl rotierenden Kurbelwellen wesentlich verbessert.

Vorteilhafterweise ist in jedem großen Kolben eine Kurbelwelle gelagert, um die auftretenden Kräfte auf möglichst viele Bauteile gleichmäßig zu verteilen. Dies ermöglicht es, hohe Drehzahlen und eine lange Lebensdauer des Motors zu erreichen.

Ein weiterer Vorteil besteht darin, daß der Zusammenbau der einzelnen umlaufenden Teile einschließlich des Getriebes außerhalb des Motorgehäuses erfolgen kann. Bei einem Motor mit drei großen Kolben und drei Kurbelwellen, wie er für 2-Takt- oder 6-Takt-Verfahren geeignet ist, kann eine nahezu gleichmäßige Kräfteverteilung dadurch erreicht werden, daß die kleinen Kolben nur einseitig gelagert sind und auf ihrer anderen Seite dynamisch zentriert werden.

Bei einem Motor mit vier großen Kolben und vier Kurbelwellen, wie er für 4-Takt-Verfahren geeignet ist, ist die Lage der kleinen Kolben trotz deren einseitiger Lagerung

0013947

A 12 256
15.1.1979
i - kt

- 4 -

infolge der vier Bolzen überbestimmt. Um auch in diesem Fall ohne extreme Anforderungen an die Fertigungstoleranzen der Bauteile eine gleichmäßige Kräfteverteilung zu gewährleisten, ist gemäß einer vorteilhaften Weiterbildung der erfindungsgemäßen Konstruktion das Innenzahnrad so ausgebildet und angeordnet, daß es die Merkmale der Ansprüche 2 und 5 aufweist. Kleine Auslenkungen des Innenzahnrades ermöglichen so innerhalb gewisser Grenzen, daß sich die jeweils günstigste Lage der Kurbelwellen und Pleuelstangen einstellt.

Infolge der gegenüber der vorbekannten Konstruktion größeren Länge der Kurbelwellen und der sich hieraus ergebenden höheren Torsionselastizität der Kurbelwellen können Belastungsspitzen, die etwa durch Ungenauigkeiten in der Verzahnung entstehen, abgebaut werden.

Um vier Pleuelstangen auf möglichst engem Raum unterbringen zu können, sind die Pleuelstangen vorteilhafterweise so ausgebildet, wie dies im Anspruch 9 ausgeführt ist.

In der Zeichnung ist ein Ausführungsbeispiel der erfindungsgemäßen Konstruktion in schematischer Weise dargestellt. Es zeigen

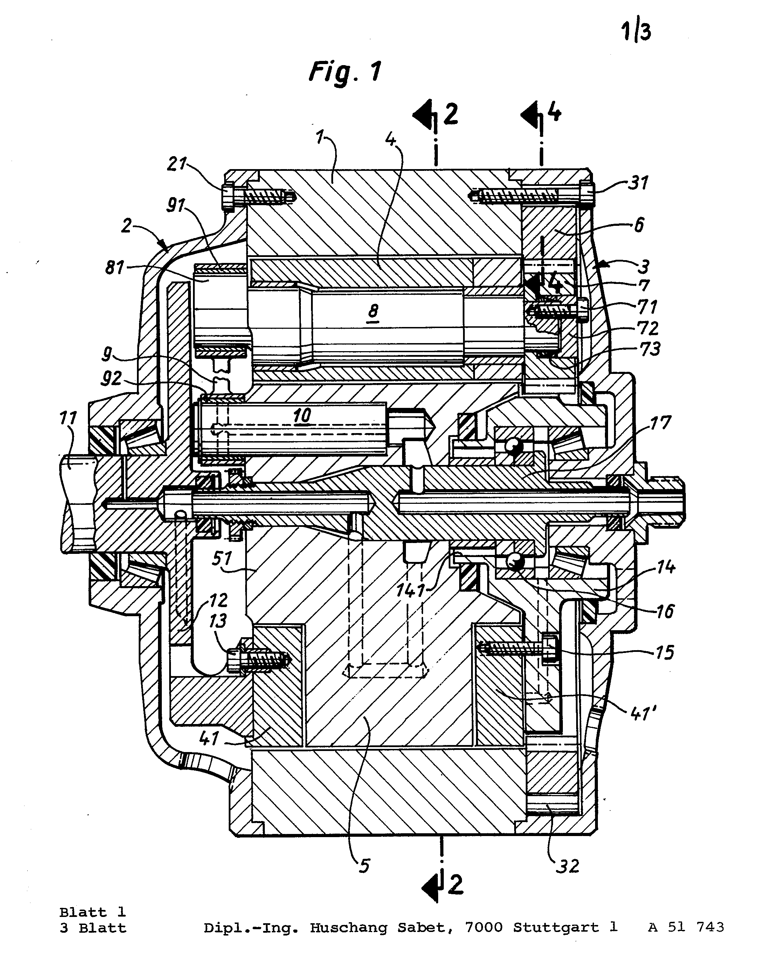

Fig. 1  einen Achsenlängsschnitt durch die Brennkraftmaschine in zwei einen Winkel miteinander bildenden Schnittebenen;

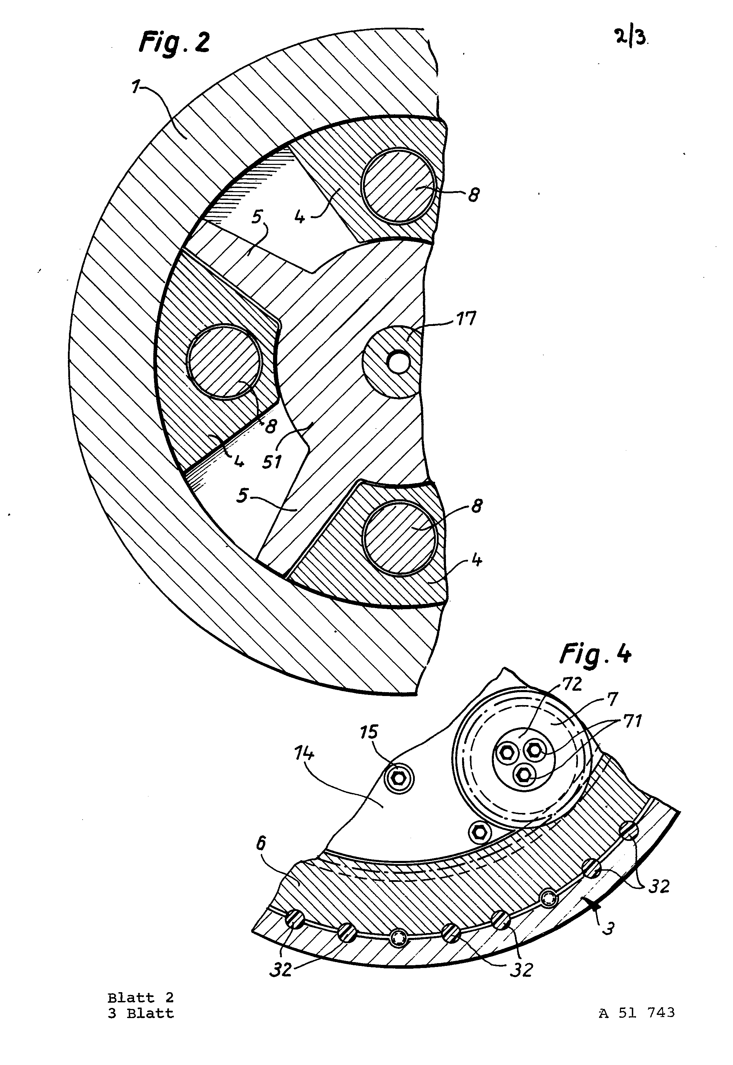

Fig. 2  einen senkrechten Teilschnitt durch die im Motorgehäuse umlaufenden Kolben nach der Schnittlinie 2 - 2 der Fig. 1;

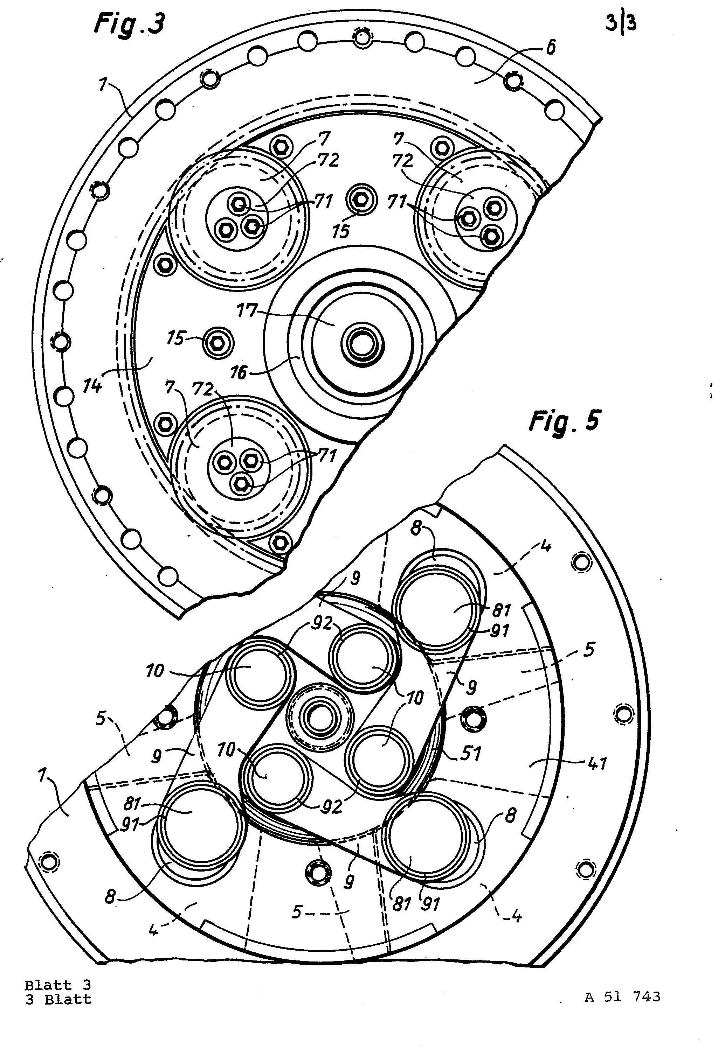

Fig. 3  eine Stirnseitenteilansicht der von der Deckelschale entblößten Steuerseite der Maschine;

Fig. 4  einen Teilschnitt nach der Schnittlinie 4 - 4 der **Fig. 1 und**

Fig. 5  eine Stirnseitenteilansicht der von der Deckelschale und dem Abtriebflansch entblößten Abtriebseite der Maschine.

Das Motorgehäuse besteht aus dem zylindermantelförmigen Teil 1 und den beiden seitlichen Deckelschalen 2 und 3. Innerhalb des Mantels 1 laufen die großen, mit den Ringscheiben 41 und 41' starr verbundenen Kolben 4 mit gleichförmiger Geschwindigkeit, und die kleinen Kolben 5, die mit ihrer innerhalb der Kolbenseitenteile 41,41' umlaufenden Nabe 51 einstückig ausgebildet sind, mit ungleichförmiger Geschwindigkeit um. Auf der der Abtriebseite entgegengesetzten Stirnseite des Motorgehäuses 1 ist das Innenzahnrad 6 innerhalb der Deckelschale 3 elastisch gelagert, die mittels Schraubenbolzen 31 mit dem zylindrischen Motorgehäuse 1

A 12 256
15.1.1979
i - kt

- 6 -

verbunden ist. Die elastische Lagerung des Innenzahnrades 6 wird dadurch bewirkt, daß die zylindrische Innenfläche der Deckelschale 3 und die zylindrische Außenfläche des Innenzahnrades 6 eine Mehrzahl randoffener Aussparungen mit jeweis im wesentlichen kreissegmentförmigem Querschnitt aufweist, deren Radius größer ist als der Radius des Schaftes der Schraubenbolzen 31, die nur eine kleinere Anzahl dieser Aussparungen durchsetzen. In die übrigen Aussparungen sind elastische, gegenüber dem Durchmesser des Schaftes der Schraubenbolzen 31 einen größeren Durchmesser aufweisende Körper 32 eingesetzt, so daß das Innenzahnrad 6 gegen die Rückstellkraft dieser elastischen Körper eine Drehbewegung ausführen kann.

Mit dem Innenzahnrad 6 kämmen Planetenräder 7, die drehfest mit je einer in den Seitenteilen 41 und 41' der großen Kolben 4 gelagerten Welle 8 verbunden sind, deren abtriebseitiges Ende eine Stirnkurbel mit einem kurzen Kurbelzapfen 81 aufweist. Auf diese Kurbelzapfen ist das eine Lager 91 je einer Plauelstange 9 aufgeschoben, deren anderes, ebenfalls geschlossenes Lager 92 auf einen Bolzen 10 aufgeschoben ist, der exzentrisch in die Nabe 51 der kleinen Kolben 5 eingesetzt ist. Die in der Deckelschale 2 gelagerte Abtriebwelle 11 weist eine einstückig mit ihr verbundene Scheibe 12 auf, die mittels Schraubenbolzen 13 mit dem Kolbenseitenteil 41 verbunden ist. Auf der der Abtriebseite entgegengesetzten Stirnseite des Motorgehäuses ist in der Deckelschale 3 ein der Lagerung der kleinen Kolben 5 dienender Flansch 14 gelagert, der mittels Schraubenbolzen 15 mit dem Kolbenseitenteil 41' verbunden ist. Der geteilte Innenring des Vierpunktlagers 16 ist mittels der gleichzeitig der Ölführung dienenden Hilfswelle 17 starr mit der Nabe 51 der kleinen Kolben 5 verbunden, die auf der Abtriebseite nur über die Bolzen 10 zentriert wird.

Die gegenüber den Planetenrädern 7 winkelunabhängige Einstellung der Verbindung der Kurbelwellen 8 mit dem jeweiligen Planetenrad erfolgt mittels eines zwischen dem über den Kolben 4 überstehenden Zapfen der Kurbelwelle 8 und dem auf den Zapfen aufgeschobenen Planetenrad angeordneten Klemmrings 73, auf den die Randleiste einer Druckscheibe 72 wirkt, die mittels in den Kurbelwellenzapfen eingeschraubter Bolzen 71 gegen den Klemmring 73 gepreßt wird.

A 12 256
15.1.1979
i - kt

# Mittelachsige Umlaufkolben-Brennkraftmaschine

## Patentansprüche

1. Mittelachsige Umlaufkolben-Brennkraftmaschine mit in dem kreiszylindrischen Mantel eines Motorgehäuses umlaufenden Kolben, von denen eine Gruppe von Kolben, die mit die Brennräume stirnseitig begrenzenden Seitenteilen verbunden sind, gleichförmig und eine andere Gruppe von zwischen diesen Kolben angeordneten Kolben ungleichförmig umläuft, wobei die gleichförmig umlaufenden, mit der Abtriebwelle verbundenen Kolben - im folgenden "große Kolben" genannt - und die ungleichförmig umlaufenden Kolben ~~umlaufenden~~
~~Kolben~~ - im folgenden "kleine Kolben" genannt - durch
ein Getriebe miteinander verbunden sind, das ein gehäusefestes Innenzahnrad, mit diesem kämmende Planetenräder,
mit den Planetenrädern drehfest verbundene, in mit den
großen Kolben starr verbundenen Teilen gelagerte Kurbelwellen und an der Nabe der kleinen Kolben gelagerte Pleuelstangen aufweist, d a d u r c h  g e k e n n z e i c h n e t ,
daß das Innenzahnrad (6) und die mit ihm kämmenden Planetenräder (7) auf der einen Seite der Kolben (4,5), das Kurbelgetriebe (9,10,81) auf der anderen Seite der Kolben angeordnet ist und die Kurbelwellen (8) in den großen Kolben (4)
oder deren Seitenteilen gelagert sind.

2. Brennkraftmaschine nach Anspruch 1, d a d u r c h  g e -
k e n n z e i c h n e t ,  daß das Innenzahnrad (6) elastisch
nachgiebig in einer Deckelschale (3) angeordnet ist.

3. Brennkraftmaschine nach den Ansprüchen 1 und 2, d a -
d u r c h  g e k e n n z e i c h n e t ,  daß die Pleuelstangen (9) biegeelastisch ausgebildet sind.

4. Brennkraftmaschine nach den Ansprüchen 1 bis 3, d a -
d u r c h  g e k e n n z e i c h n e t ,  daß an den beiden
Stirnseiten des Gehäusemantels (1) eine das Kurbelgetriebe

- 10 -

(9,10,81) bzw. das Zahnradgetriebe (6,7) abdeckende Schale (2,3) mittels Schraubenbolzen (21,31) befestigt ist.

5. Brennkraftmaschine nach den Ansprüchen 1 bis 4, d a - d u r c h   g e k e n n z e i c h n e t , daß am äußeren Umfang des Innenzahnrades (6) und an der zylindrischen Innenfläche der Deckelschale (3) Aussparungen mit einem im wesentlichen kreissegmentförmigen Querschnitt vorgesehen sind, deren einer Teil dem Eingriff von einen kleineren Schaftdurchmesser aufweisenden Kopfbolzen (31) dient, mit denen die Deckelschale (3) an dem Motorgehäuse (1) befestigt ist, und deren anderer Teil der Aufnahme von elastisch nachgiebigen zylindrischen, das Innenzahnrad (6) mit der Deckelschale (3) verbindenden Körpern (32) dient.

6. Brennkraftmaschine nach den Ansprüchen 1 bis 5, d a - d u r c h   g e k e n n z e i c h n e t , daß mit der in der Deckelschale (2) gelagerten Abtriebwelle (11) eine Scheibe (12) verbunden ist, die mittels Schraubenbolzen (13) mit dem einen Seitenteil (41) der Kolben (4) verbunden ist.

7. Brennkraftmaschine nach den Ansprüchen 1 bis 6, d a - d u r c h   g e k e n n z e i c h n e t , daß in der hohlen Nabe (51) der kleinen Kolben (5) eine der Ölzufuhr

A 12 256
24.1.1979
f - kt

- 11 -

dienende Hohlwelle (17) angeordnet ist, auf der mittels eines Kugellagers (16) ein an der Deckelschale (3) gelagerter Lagerflansch (14) gelagert ist, der mittels Schraubenbolzen (15) mit dem anderen Seitenteil (41') der Kolben (4) verbunden ist.

8. Brennkraftmaschine nach den Ansprüchen 1 bis 7, d a - d u r c h  g e k e n n z e i c h n e t , daß die Kurbelwellen (8) im Bereich ihres kurbelzapfenseitigen Endes einen größeren Durchmesser als an ihrem den Planetenrädern (7) zugewandten Ende aufweisen.

9. Brennkraftmaschine nach den Ansprüchen 1 bis 8, d a - d u r c h  g e k e n n z e i c h n e t , daß die einen unsymmetrisch ausgebildeten Schaft aufweisenden Pleuelstangen (9) eine einseitige Aussparung aufweisen, in die das kleine Auge der benachbarten Pleuelstange eintauchen kann.

10. Brennkraftmaschine nach den Ansprüchen 1 bis 9, d a - d u r c h  g e k e n n z e i c h n e t , daß die Kurbelwellen (8) im Bereich ihres kurbelzapfenseitigen Gleitlagers eine konische Verjüngung in Richtung auf den Kurbelzapfen (81) aufweisen.

0013947

1/3

**Fig. 1**

0013947

/3

*Fig. 2*

1

5   4

8

17

8

4   51

5

8

4

*Fig. 4*

72

7

15   71

14

6

32

32   32   3

Blatt 2
3 Blatt

A 51 743

**Fig.3**

**Fig. 5**

**Europäisches Patentamt**

**EUROPÄISCHER RECHERCHENBERICHT**

Nummer der Anmeldung

EP 80 10 0233

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A - 2 041 348 (OFFERGELD et al.)<br>* Seite 2, Absatz 4 bis Seite 3;<br>  Fig. 1,2, Positionen 12 bis 18 *<br>-- | 1,4 |
| D | DE - C - 2 021 640 (SABET)<br>* Spalte 3, Zeile 1 bis Spalte 4,<br>  Zeile 31; Fig. 1, Positionen 10,11,<br>  20 *<br>---- | 1,6 |

**KLASSIFIKATION DER ANMELDUNG (Int.Cl.3)**

F 01 C  1/077
F 02 B  55/08

**RECHERCHIERTE SACHGEBIETE (Int. Cl.3)**

F 01 C  1/00
F 02 B  55/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde
   liegende Theorien oder
   Grundsätze
E: kollidierende Anmeldung
D: in der Anmeldung angeführtes
   Dokument
L: aus andern Gründen
   angeführtes Dokument
&: Mitglied der gleichen Patentfamilie, übereinstimmendes
   Dokument

Der vorliegende Recherchenbericht wurde für alle Patentansprüche erstellt.

| Recherchenort | Abschlußdatum der Recherche | Prüfer |
|---|---|---|
| Berlin | 22-04-1980 | STÖCKLE |